**Europäisches Patentamt**

**European Patent Office**

**Office européen des brevets**

(19)

(11) Numéro de publication: **0 192 615**
**B1**

(12) **FASCICULE DE BREVET EUROPEEN**

(45) Date de publication du fascicule du brevet:
**24.05.89**

(51) Int. Cl.⁴: **F16C 33/76**

(21) Numéro de dépôt: **86830032.8**

(22) Date de dépôt: **12.02.86**

(54) **Dispositif d'étanchéité radiale en acier pour groupes de roulement.**

(30) Priorité: **22.02.85 IT 478085 U**

(43) Date de publication de la demande:
**27.08.86 Bulletin 86/35**

(45) Mention de la délivrance du brevet:
**24.05.89 Bulletin 89/21**

(84) Etats contractants désignés:
**DE FR GB NL SE**

(56) Documents cités:
**US-A- 3 476 395**
**US-A- 3 656 764**
**US-A- 3 951 783**
**US-A- 3 987 561**

(73) Titulaire: **Selvatici, Franco, Via L. Rodriguez, 4, I-40068 S. Lazzaro di Savena (BO)(IT)**

(72) Inventeur: **Selvatici, Franco, Via L. Rodriguez, 4, I-40068 S. Lazzaro di Savena (BO)(IT)**

(74) Mandataire: **Pederzini, Paolo, BUGNION S.p.A. Via Farini n. 37, I-40124 Bologna(IT)**

ACTORUM AG

## Description

La présente invention a trait à un dispositif d'étanchéité radiale en acier pour groupes de roulement.

On sait que dans les appareillages destinés à fonctionner en ambiances particulièrement pleines d'impuretés, telles que boue, poussière et similaires, il faut prévoir des dispositifs d'étanchéité appropriés pour protéger les organes de roulement. On emploie actuellement à cet effet des dispositifs d'étanchéité radiale en acier comportant essentiellement un groupe de bagues définissant des logements annulaires destinés à recevoir des garnitures en caoutchouc synthétique voir p.e. US-A 3 987 561, 3 951 783, 3 656 764 et 3 476 395. Ces dispositifs d'étanchéité radiale en acier ont généralement des gabarits considérables en sens axial à l'arbre sur lequel l'organe à protéger est monté, de manière qu'ils impliquent un réglage convenable du logement, donnant également lieu à une exploitation plus mauvaise des caractéristiques du pivot lui-même qui est obligé de travailler encore plus en porte-à-faux.

En outre, les dispositifs d'étanchéité radiale en acier connus demandent l'emploi de convenables entretoises ainsi que d'accessoires destinés à supporter les poussées latérales.

La tâche technique de la présente invention est de pallier les inconvénients mentionnés ci-dessus, mettant en oeuvre un dispositif d'étanchéité radiale en acier d'encombrement très réduit et qui n'a pas besoin d'autres accessoires.

Dans le cadre de cette tâche technique, un autre but de la présente invention est de mettre en œuvre un dispositif d'étanchéité radiale en acier de construction simple, de fonctionnement sûrement fiable et d'emploi universel.

La tâche technique et le but précités sont atteints selon l'invention par un dispositif d'étanchéité radiale en acier pour groupes de roulement comportant un groupe de bagues définissant des logements annulaires destinés à recevoir des garnitures en caoutchouc synthétique lequel est caractérisé en ce qu'il comporte une baque frottante intérieure pourvue à son extérieur d'un logement destiné à recevoir partiellement une garniture annulaire d'étanchéité; une bague frottante extérieure destinée à prendre appui le long de son bord contre une face de ladite bague intérieure; une entretoise annulaire destinée à être disposée dans ladite bague intérieure et à être serrée entre ladite bague extérieure et le groupe de roulement à protéger et étant pourvue à son intérieur d'un logement destiné à recevoir partiellement une autre garniture annulaire d'étanchéité.

Par cette solution on obtient une étanchéité très efficace et d'encombrement axial réduit où un barrage efficace à la pénétration des agents extérieurs tels que boue, poussière et similaires, est représenté par le contact entre les surfaces en regard de la première et de la deuxième bague frottante, lesquelles frottent l'une par rapport à l'autre.

Avantageusement le logement destiné à recevoir une garniture annulaire d'étanchéité présentée par la bague frottante intérieure (destiné à être portée en contact avec l'organe de roulement à protéger, par exemple un palier) est conformé de manière qu'il presse cette garniture tant contre l'organe de roulement que contre la surface intérieure du logement dans lequel l'ensemble organe de roulement-dispositif d'étanchéité est monté, assurant ainsi une étanchéité double de la garniture, dont l'une est en sens radial et l'autre en sens axial par rapport à l'organe de roulement à protéger.

Les détails de l'invention ressortiront plus clairement de la description détaillée d'une forme d'exécution préférée du dispositif d'étanchéité donnée à simple titre d'exemple non limitatif en se référant aux dessins annexés, dans lesquels:

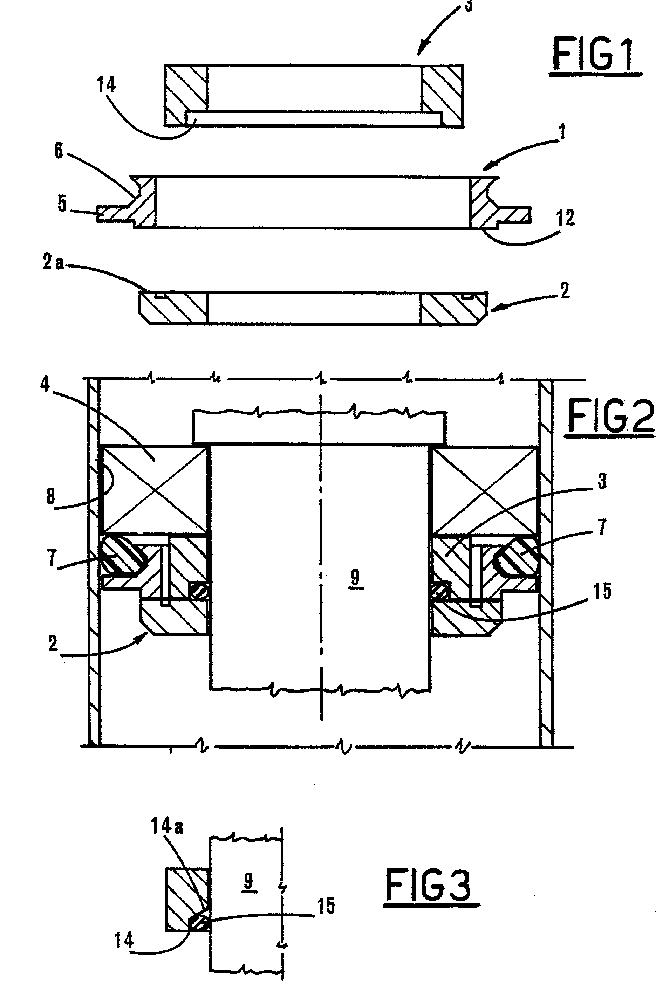

- la figure 1 est une vue éclatée en coupe longitudinale du dispositif en question;
- la figure 2 est une vue partielle en coupe du dispositif en configuration d'assemblage;
- la figure 3 montre un détail du dispositif, c'est-à-dire l'entretoise, selon une possible forme alternative d'exécution.

En se référant à ces figures, le dispositif d'étanchéité en question comporte essentiellement une bague frottante intérieure 1; une bague frottante extérieure 2 qui est destinée à prendre appui, le long de son bord, contre une face de la bague 1; et une entretoise annulaire 3 qui est destinée à être disposée dans la bague 1 et serrée entre la bague 2 et l'élément de roulement (normalement, mais non nécessairement, un palier 4) qui doit être protégé.

Plus en détail, la bague frottante 1 est de forme interne cylindrique et est pourvue à son extérieur d'une sorte de lèvre annulaire 5; une gorge annulaire 6 pourvue de parois latérales évasées est prévue sur la surface extérieure de cette bague 1, contiguë à la lèvre annulaire et sur le côté destiné à être tourné vers le palier 4 en position d'assemblage. La lèvre annulaire 5 et la gorge 6 définissent le logement destiné à recevoir partiellement une garniture d'étanchéité 7 en caoutchouc synthétique, du type "joint O-ring".

En position d'assemblage la garniture 7 est destinée à exercer une action étanche sur le palier 4 et sur la surface du logement 8 dans lequel le groupe est monté.

La bague frottante extérieure 2 est de forme cylindrique aplatie et a un diamètre intérieur légèrement plus plus large que le diamètre de l'arbre 9 sur lequel le palier 4 est monté.

La face 2a de la bague 2 est destinée à prendre appui contre la correspondante face annulaire 12 de la bague frottante 1. Cet appui sera assuré par des éléments de serrage, tels que colliers ou écrous de réglage, montés sur la partie terminale de l'arbre 9 et non représentés sur les figures.

Ces deux surfaces, convenablement traitées, sont destinées à frotter de manière étanche l'une contre l'autre.

L'entretoise 3 est de forme cylindrique et son diamètre intérieur est égal à celui de la bague 2.

Sur sa face destinée à prendre appui contre la bague 2, l'entretoise 3 est pourvue d'un logement annulaire pourvu d'un gradin 14. Ce gradin définit, en collaboration avec la bague 2, une gorge destinée à loger une autre garniture 15 de type "joint O-ring". La garniture 15 est de section sensiblement plus petite que la garniture 7 et, en position d'assemblage, est destinée à exercer une action étanche sur l'arbre 9. L'entretoise 3 a en outre des dimensions axiales légèrement supérieures à celles de la bague 1.

Le groupe formé des bagues 1 et 2 et de l'entretoise 3, y compris les correspondantes garnitures 7 et 15, constitue le dispositif faisant l'objet de l'invention lequel est en mesure d'assurer une parfaite étanchéité pour la protection de l'élément de roulement 4.

Ce dispositif a un encombrement axial remarquablement inférieur à celui des dispositifs d'étanchéité radiale en acier de type traditionnel; practiquement l'encombrement est égal à celui des pare-huile conventionnels et de ce fait il ne faut pas modifier le logement du groupe 4. Cet encombrement plus réduit entraîne également une meilleure utilisation des caractéristiques du groupe 4 qui peut ainsi travailler dans une condition moins en porte-à-faux.

Il faut remarquer en outre que le dispositif en question ne nécessite pas d'accessoires pour les poussées latérales et qu'il accomplit également la fonction d'entretoise.

Les bagues 1 et 2 sont de préférence produites en acier du type 100 Cr 6, l'entretoise 3 en acier de type C 43.

Avantageusement en outre la surface 2a et la surface 12 des bagues 2 et 1 respectivement, destinées à l'appui réciproque, sont soumises à des opérations de rodage.

Selon une forme d'exécution possible le logement 14 présenté par l'entretoise 3 peut être faconné tel que représenté sur la figure 3, c'est-à-dire que la paroi 14a du gradin 14 peut être inclinée de manière à favoriser la poussée et donc l'etanchéité de la garniture 15 sur l'arbre 9.

Pratiquement les matériaux employés peuvent être de tout genre, la forme et les dimensions de toute nature et grandeur, suivant les nécessités.

## Revendications

1. Dispositif d'étanchéité radiale en acier pour groupes de roulement comportant un groupe de bagues définissant des logements annulaires destinés à recevoir des garnitures en caoutchouc synthétique, caractérisé en ce qu'il comporte: une bague frottante intérieure (1) pourvue à son extérieur d'un logement (6) destiné à recevoir partiellement une garniture annulaire d'étanchéité (7); une bague frottante extérieure (2) destinée à prendre appui, le long de son bord, contre une face (12) de ladite bague intérieure (1); une entretoise annulaire (3) destinée à être disposée dans ladite bague intérieure (1) et à être serrée entre ladite bague extérieure (2) et le groupe de roulement (4) à protéger et étant pourvue à son intérieur d'un logement (14) destiné à recevoir partiellement une autre garniture annulaire d'étanchéité (15).

2. Dispositif selon la revendication 1, caractérisé en ce que ladite bague frottante extérieure (2) et ladite entretoise (3) ont leur diamètre intérieur légèrement plus large que le diamètre de l'arbre (9) sur lequel ledit groupe est monté, sur cet arbre (9) exerçant une action étanche la garniture (15) logée dans ladite entretoise (3).

3. Dispositif selon la revendication 1, caractérisé en ce que ladite bague intérieure (1) est pourvue sur son pourtour d'une lèvre annulaire (5) adjacente au logement (6) destiné à recevoir partiellement la garniture (7), laquelle est associée à la bague intérieur (1) et est destinée à fournir une paroi d'appui à ladite garniture; ledit logement (6) étant pourvu de parois latérales évasées qui convergent vers le fond du même logement.

4. Dispositif selon la revendication 1, caractérisé en ce que le logement (14) de l'entretosie annulaire (3) destiné à contenir partiellement la garniture susceptible d'être associée à l'entretoise elle-même, a au moins une partie de sa paroi intérieure inclinée par rapport à l'axe de la bague, de manière à causer une poussée sur la garniture avec une composante vers l'arbre sur lequel le dispositif est monté.

5. Dispositif selon la revendication 1, caractérisé en ce que ladite bague extérieure (2) et ladite entretoise (3) ont leur diamètre intérieur lègèrement plus large que le diamètre de l'arbre sur lequel doit être monté le dispositif, de manière qu'après l'assemblage elles sont concentriques par rapport à celui-ci.

## Claims

1. A radial sealing device made of steel for bearings with rolling element comprising a set or rings defining annular housings designed to receive gaskets made of synthetic rubber, characterized in that it comprises: an inner sliding ring (1) provided on the outside thereof with a housing (6) designed to partially receive an annular hermetic gasket (7); an outer sliding ring (2) designed to rest, along its edge, against one face (12) of said inner ring (1); an annular spacer (3) designed to be located within said inner ring (1) and squeezed between the outer ring (2) and the bearing with rolling element (4) to be protected, and being provided in the interior thereof with a housing (14) designed to partially receive a further annular hermetic gasket (15).

2. A device according to claim 1, characterized in that said outer sliding ring (2) and spacer (3) have an inner diameter sligthly larger than the diameter of the shaft (9) on which said bearing with rolling element is mounted, a sealing action being accomplished on said shaft (9) by the gasket (15) housed in the spacer (3).

3. A device according to claim 1, characterized in that said inner ring (1) is circumferentially provided with an annular lip (5) adjacet the housing (6) designed to partially receive the gasket (7), which lip is associated with the inner ring (1) and is designed to provide a support wall for said gasket; said housing (6) having flared side walls converging towards the bottom of the housing itself.

4. A device according to claim 1, characterized in that the housing (14) in the annular spacer (3) designed to partially contain the gasket adapted to be associated with said spacer has at least one portion of its inner wall inclined to the ring axis, to give rise to a thrust on the gasket with a component towards the shaft on which the device is mounted.

5. A device according to claim 1, characterized in that the inner diameter of said outer ring (2) and spacer (3) is slightly larger than the diameter of the shaft on which the device must be mounted, so that after assembling said outer ring and spacer are in concentric relation with the shaft.

## Patentansprüche

1. Radiale Stahlabdichtungsvorrichtung für Wälzlager, enthaltend eine Anzahl von Ringen, welche ringförmige Sitze zur Aufnahme von Dichtungen aus synthetischem Kautschuk bilden, dadurch gekennzeichnet, dass sie wie folgt enthält: Einen internen Auslgeichsring (1), der an seiner Aussenseite einen Sitz (6) aufweist, welcher zur teilweisen Aufnahme einer ringförmigen Dichtung (7) bestimmt ist; einen externen Ausgleichsring (2), der dazu dient, entlang seinem Rand an einer Fläche (12) des genannten internen Ringes anzuliegen; ein ringförmiges Abstandstück (3), das dazu bestimmt ist, in dem genannten internen Ring (1) angeordnet und zwischen dem genannten externen Ring (2) und dem zu schützenden Wälzlager (4) gespannt zu werden, und das innen einen Sitz (14) aufweist, der zur teilweisen Aufnahme einer weiteren ringförmigen Dichtung (15) vorgesehen ist.

2. Vorrichtung nach Patentanspruch 1, dadurch gekennzeichnet, dass der genannte externe Ausgleichsring (2) und das genannte Abstandstück (3) einen leicht grösseren Innendurchmesser haben als der Durchmesser der Welle (9), auf der die genannte Gruppe montiert ist, wobei die Dichtung (15), die in dem Abstandstück (3) liegt, auf die Welle (9) selbst eine Dichtwirkung ausübt.

3. Vorrichtung nach Patentanspruch 1, dadurch gekennzeichnet, dass der genannte interne Ring (1) an seinem Umlauf eine ringförmige und an den Sitz (6) zur teilweisen Aufnahme der Dichtung (7) angrenzende Lippe (5) aufweist, die mit dem internen Ring (1) verbunden und dazu bestimmt ist, eine Anlagewand für die genannte Dichtung zu bilden, wobei der genannte Sitz (6) schräge Seitenwände aufweist, so dass diese sich zum Boden des Sitzes selbst hin als konvergierend zeigen.

4. Vorrichtung nach Patentanspruch 1, dadurch gekennzeichnet, dass der Sitz (14) des ringförmigen Abstandstückes (3), bestimmt zur teilweisen Aufnahme der dem Abstandstück selbst zugeordneten Dichtung, wenigstens einen Teil seiner Innenwand schräg im Verhältnis zu der Achse des Ringes aufweist, so dass er auf die Dichtung einen Druck mit einer Komponente in Richtung der Welle bewirkt, auf der die Vorrichtung montiert ist.

5. Vorrichtung nach Patentanspruch 1, dadurch gekennzeichnet, dass der genannte externe Ring (2) und das genannte Abstandstück (3) einen leicht grösseren Innendurchmesser haben als der Durchmesser der Welle, auf der die Vorrichtung montiert werden soll, so dass sie sich im Verhältnis zu letzterer nach dem Aufziehen als konzentrisch erweisen.

FIG1

FIG2

FIG3